# EUROPEAN PATENT APPLICATION

(11) **EP 4 512 503 A1**
(43) Date of publication of application: **26.02.2025**
(21) Application number: 23192463.0
(22) Date of filing: 21.08.2023
(51) Int. Cl.: B01D 19/00, B01D 61/02, C02F 1/44

(54) **DEGASSING ARRANGEMENT FOR DEGASSING A FLOWING LIQUID**

(71) Applicant: Sartorius Lab Instruments GmbH & Co. KG, 37079 Göttingen (DE)
(72) Inventor: FILLA, Johannes, 37079 Göttingen (DE); LOHRBERG, Martin, 37079 Göttingen (DE)
(74) Representative: Gottschald Patentanwälte Partnerschaft mbB

(57) **Abstract**

The invention relates to a degassing arrangement for degassing a flowing liquid in which a gas is dissolved with a flow channel (2) with a channel inlet (4) and a channel outlet (5), wherein the flow channel (2) comprises an initial zone (6), which has a narrowed flow cross-section compared to a flow cross-section preceding the initial zone (6), such that the velocity of the liquid flow (3) in the initial zone (6) is increased compared to a velocity of the liquid flow (3) before the initial zone (6) and thereby the static pressure of the liquid is reduced such that the gas is released from the liquid, wherein the flow channel (2) comprises a separation zone (8), which in the direction of flow (7) follows the initial zone (6) and in which released gas is separated from the liquid flow (3). It is proposed, that the separation zone (8) comprises an upper section (10) and a lower section (11), that the separation zone (8) has an enlarged flow cross-section compared to the smallest flow cross-section of the initial zone (6), such that the velocity of the liquid flow (3) is slower in the separation zone (8) than in the initial zone (6), that the gas bubbles in the separation zone (8) rise due to gravity along the separation zone (8), whereby degassed liquid collects in the lower section (11), that the degassed liquid flows out through the channel outlet (5), and, that a degassing outlet (9) is arranged at the upper section (10), through which the released gas flows out of the flow channel (2).

## Description

The present invention relates to a degassing arrangement for degassing a flowing liquid according to the general part of claim 1, to a liquid processing system for processing a liquid for a biotechnological process according to claim 12, to a use of a degassing arrangement for producing pure or ultrapure water according to claim 15 and to a method of degassing a flowing liquid according to the general part of claim 16.

Degassing of liquids is important in many fields. Liquids can contain different types and amounts of gasses and the degassing may be performed with different targets of remaining gas concentrations. A primary focus in the present application is the production of pure and ultrapure water, for example for medical, analytical or biotechnological processes.

Various devices and methods for degassing water to be purified, in particular for the production of pure and ultrapure water, are known. Above all, the removal of CO₂ from the water is of particular interest, since CO₂ can negatively influence the efficiency of an electro-deionization (EDI) and/or an ion exchanger typically used in purification. This can lead to significantly higher costs for the use of EDI and ion exchangers, since these are to be exchanged more often, have to be regenerated, or have to be made significantly larger in the devices for water purification in order to operate the water purification efficiently.

For example, US 5,156,739 discloses a system for the purification and degassing of water, in particular the removal of CO₂, by reverse osmosis (RO). In a posttreatment, the water previously cleaned by reverse osmosis, possibly extended by deionization, is exposed to an underpressure, i.e. a pressure that is less than the pressure of the water. This underpressure is used to remove gas dissolved in the purified water across a hydrophobic membrane, for example in the form of hollow fibers.

Another method for removing CO₂ is known from US 5,997,745. By adding an alkaline agent between two reverse osmosis runs, CO₂ is converted into carbonates and can then be removed via a membrane.

US 5,338,456 describes degassing using a combination of pressure degassing (forced-draft decarbonator) and vacuum degassing, which are upstream of reverse osmosis. Both degassing devices use tanks for holding the liquid, which is suboptimal as tanks allow backmixing and therefore impede a continuous processing. Here, a more continuous and streamlined solution is sought.

Another prior art (US 5,749,945) is related to a degassing arrangement according to the general part of claim 1, however with a use case quite different than water purification. This known prior art aims at a very complete separation of liquid and gas and has a high complexity.

US 5,749,945 shows a degassing arrangement for degassing a flowing liquid in which a gas is dissolved, wherein the degassing arrangement comprises a flow channel through which the liquid flows as a liquid flow, wherein the flow channel comprises a channel inlet for the inflow of the liquid and a channel outlet for the outflow of the liquid, wherein the flow cross-section of the flow channel varies between the channel inlet and the channel outlet.

The flow channel comprises an initial zone arranged between the channel inlet and the channel outlet, which has a narrowed flow cross-section compared to a flow cross-section preceding the initial zone in a direction of flow, such that the velocity of the liquid flow in the initial zone is increased compared to a velocity of the liquid flow before the initial zone and thereby the static pressure of the liquid is reduced such that the gas is released from the liquid. This effect is known as the Venturi effect and used to release gas from liquid in a generally known manner.

The flow channel comprises a separation zone arranged between the channel inlet and the channel outlet, which in the direction of flow follows the initial zone and in which released gas is separated from the liquid flow. In the known prior art, this separation zone comprises a vortex for separating gas and liquid via centrifugal forces.

It is a challenge to improve on the known prior art. In particular, a degassing arrangement with a high efficiency, small complexity and a small footprint is sought and the efficiency of a water purification system should be increased. The invention is based on the problem of improving the known degassing arrangement such that a further optimization regarding the named challenge is reached.

The above-noted problem is solved by the features of the characterizing part of claim 1.

The main realization of the present invention is that it is possible to separate liquid and gas via gravity behind a Venturi nozzle thereby receiving a degassing arrangement with a low complexity and by combining the Venturi effect with a separation zone along which gas rises due to gravity, a high efficiency can be achieved with a small footprint and with a continuous fluid flow. Compared to a tank in which the fluid enters and mixes with fluid which has entered before (backmixing), letting the gas rise along the separation zone helps reduce backmixing.

Importantly, the dwelling time of the liquid flow in the separation zone after passing the initial zone is sufficiently long to enable a substantial part of the gas bubbles in the separation zone to rise due to gravity along the separation zone and to accumulate in the upper section. By varying the size of the flow cross-section the dwelling time can be influenced. The larger the flow cross-section is, the longer the dwelling time. Additionally or alternatively, the longitudinal extension of the separation zone in the direction of flow has a direct impact on the dwelling time and thus also on the separation of the released gas. The longer the separation zone, the longer the dwelling time. Depending on the space available within a device/system in which the degassing arrangement of the present invention is to be used, the separation zone can be dimensioned individually. This ensures a high degree of flexibility in design.

In detail, it is proposed that the separation zone comprises an upper section and a lower section, that the separation zone has an enlarged flow cross-section compared to the smallest flow cross-section of the initial zone, such that the velocity of the liquid flow is slower in the separation zone than in the initial zone, that the gas bubbles in the separation zone rise due to gravity along the separation zone and accumulate in the upper section, whereby degassed liquid collects in the lower section, that the degassed liquid flows out through the channel outlet as a main flow, and, that a degassing outlet is arranged at the upper section, through which the released gas flows out of the flow channel as a secondary flow.

In embodiments according to claim 2, the degassing arrangement comprises a diffuser zone in the direction of flow between the initial zone and the separation zone with a continuous transition between the zones. Flow profiles can additionally influence the formation, rise and accumulation of gas bubbles. Flow detachment up to a turbulent flow can trigger undesirable effects such as dead zones or backmixing through dispersion. A continuous transition of the initial zone into the diffuser zone and/or of the diffuser zone into the separation zone can help avoiding the above-mentioned effects by maintaining a laminar flow.

Embodiments according to claim 3 relate to the degassing arrangement which comprises a nozzle zone with a continuously decreasing flow cross-section, in the direction of flow, between the channel inlet and the initial zone. Flow detachments and turbulences can lead to a flow loss, which ultimately also affects the underpressure formation in the initial zone, since this depends on the flow velocity. A continuous transition avoids the aforementioned flow losses here.

According to claim 4, the degassing arrangement may comprise a constriction zone following the separation zone in the direction of flow. The constriction zone limits the upper part of the separation zone in the direction of flow and the, in vertical direction from the common geometric center axis, downward shifted geometric center axis of the channel outlet, creates a kind of headspace which promotes the accumulation and retention of raising gas bubbles so that they can be extracted more efficiently via the degassing outlet.

The degassing arrangement may be partially rotationally symmetrical (claim 5). Such round tubes lead to a homogenous flow profile. Other forms of cross-section are advantageously possible and described for some zones.

According to claim 6, the degassing arrangement comprises a separating arrangement which may comprise a hydrophobic membrane. During the degassing process, the gas-phase forms a secondary flow which is removed. The degree of selectivity with which this secondary flow can be discharged and the main flow be retained is a crucial factor for the efficiency of the process. The use of a hydrophobic membrane here can bring an additional improvement. Further, such membrane prevents the microbiological contamination of the main flow from the outside or the suction channel through the degassing outlet. Therefore, by using the degassing arrangement of this embodiment sterile conditions may be maintained.

Embodiments according to claim 7 relate to details of a guiding arrangement comprising guiding elements which form a flow-through obstacle structure in the separation zone of the degassing arrangement. This obstacle structure is designed to retain at least some smaller bubbles in the flow until they coalesce into larger ones. Thus, they can also rise and be discharged with the secondary flow through the degassing outlet. Providing such obstacles is a way of increasing the amount of removed gas without increasing the size of the degassing arrangement.

According to claim 8, the degassing arrangement may have a suction arrangement where a suction channel applies a pressure difference via the Venturi effect between the separation zone and the degassing outlet. An appropriate pressure gradient supports the discharge of the secondary flow including the accumulated gas bubbles from the separating arrangement.

Embodiments according to claim 9 relate to details of the degassing arrangement comprising a suction channel with a suction zone which is arranged between the suction channel inlet and the suction channel outlet. Claims 10 and 11 relate to further constructional details comparable to the above described.

Another teaching according to claim 12, which is of equal importance, relates to a liquid processing system for processing a liquid for a biotechnological process or for processing a liquid for analytical processes such as HPLC, ion chromatography, TOC analysis, PCR, electrophoresis or photometry, wherein the liquid processing system may comprise a proposed degassing arrangement, wherein the degassing arrangement uses the Venturi effect to separate gas from liquid, wherein the liquid processing system is configured to produce pure or ultrapure water, wherein the liquid processing system comprises a reverse-osmosis system and/or a deionization system, wherein the degassing arrangement is located downstream of the reverse-osmosis system and/or upstream of the deionization system. If the liquid processing system comprises a proposed degassing arrangement, all other features of the liquid processing system are optional.

The proposed degassing arrangement is particularly well suited for use in a liquid processing system for producing pure water in a manner where it is not necessary to remove the gas completely or as completely as possible. If a subsequent step of removing the remaining gas differently is included or a certain level of gas is allowable, the proposed degassing arrangement can be designed to efficiently remove a certain amount of gas and thereby reduce the burden on the subsequent gas removal steps, which may for example be filter steps. In particular, reducing the carbon dioxide in water reduces stress on a subsequent deionization system.

All explanations given with regard to the proposed degassing arrangement are fully applicable.

According to claim 13, the liquid processing system, in some embodiments, comprises at least two degassing arrangements. In order to achieve an optimal overall degassing quality as well as a high process stability towards fluctuating concentrations of dissolved gases in the fluid, several degassing arrangements can be operated. Serial operation is advantageous for this purpose as peaks can be intercepted particularly well in this way.

Embodiments according to claim 14 relate to details of a liquid processing system where a wastewater output line is connected to the suction channel. An energy efficient operation of the degassing arrangement is of general importance. The provision of the suction fluid by the wastewater output line of the reverse-osmosis system or of the deionization system is a particularly advantageous approach here.

Another teaching according to claim 15, which is of equal importance, relates to a use of the proposed degassing arrangement for producing pure or ultrapure water, preferably, wherein the production of pure or ultrapure water comprises a reverse-osmosis step and/or a deionization step, more preferably, wherein the degassing is performed after the reverse-osmosis step and/or prior to the deionization step.

All explanations given with regard to the proposed degassing arrangement and the proposed liquid processing system are fully applicable.

Another teaching according to claim 16, which is of equal importance, relates to a method of degassing a flowing liquid, in particular water, in which a gas, in particular carbon dioxide, is dissolved.

All explanations given with regard to the proposed degassing arrangement, the proposed liquid processing system and the proposed use are fully applicable.

This method may further be a method of producing pure or ultrapure water comprising the following steps
I) pressurizing water to generate a water flow, preferably by means of a pump;
II) optionally, measuring the conductivity of the water flow;
III) passing the water flow through at least one reverse osmosis system, wherein in case of more than one reverse osmosis systems, they are operated in parallel mode;
IV) optionally, measuring the conductivity of the water flow;
V) passing the water flow through the proposed degassing arrangement;
VI) passing the water flow through a deionization system (e.g., an EDI stack);
VII) optionally, measuring the conductivity of the water flow; and
VIII) obtaining pure or ultrapure water from the water flow.

In a preferred embodiment of the method of producing pure or ultrapure water, said method comprises further a step of water softening performed after step III) and prior the step VI).

In the following, embodiments of the invention are explained with respect to the drawing. The drawing shows in
- Fig. 1,: two embodiments of the proposed degassing arrangement in a) and b), in b) with a suction arrangement,
- Fig. 2,: the use of the degassing arrangement for producing pure or ultrapure water in a liquid processing system and
- Fig. 3,: a computer simulation of main flow, secondary flow and suction fluid flow in a degassing arrangement with flow channel and suction channel (comparable with the degassing arrangement of Fig. 1b)

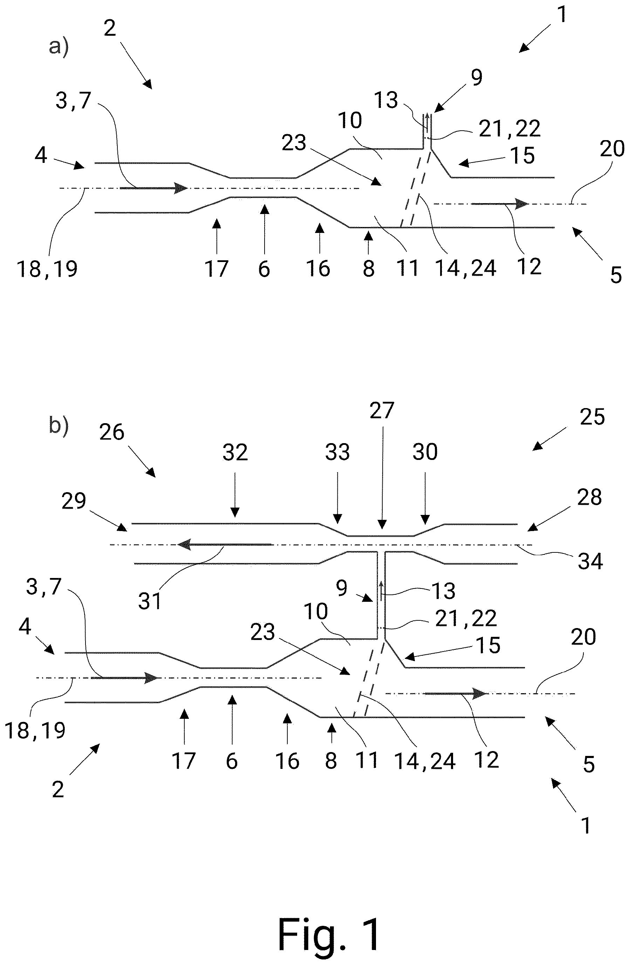

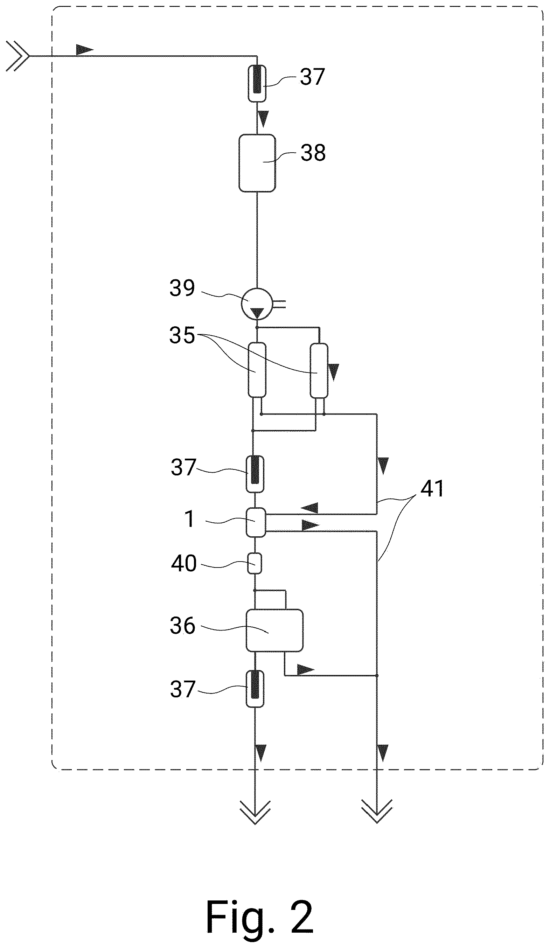

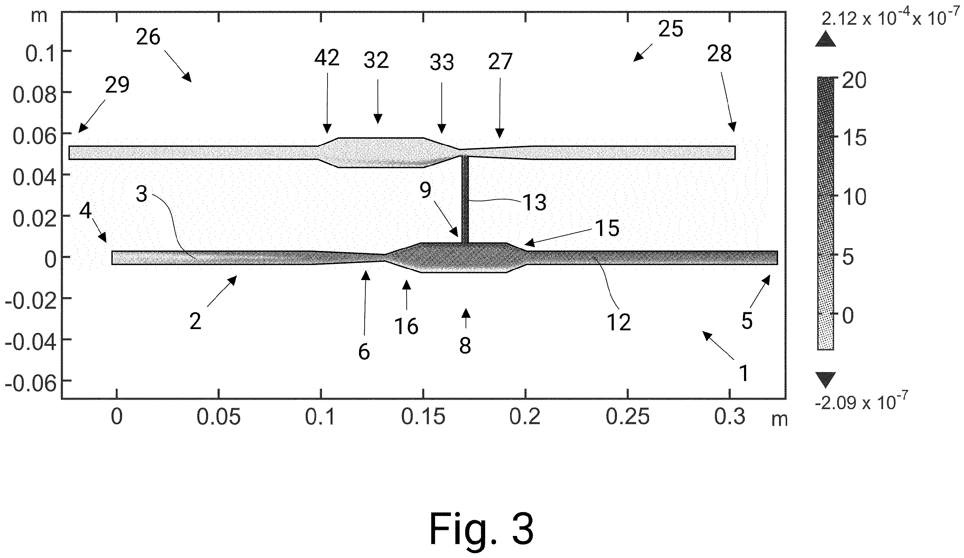

Proposed is a degassing arrangement 1 for degassing a flowing liquid, in particular water, in which a gas, in particular carbon dioxide, is dissolved. Fig. 1 shows two embodiments of the degassing arrangement 1 in a) and b). Fig. 2 shows a preferred use of the degassing arrangement 1. Fig. 3 shows another embodiment of the degassing arrangement 1. The degassing arrangement 1 may be used in the production of pure or ultrapure water to reduce the amount of gas in the water. Fig. 1 is only a two-dimensional schematic of the degassing arrangement 1 but shows the preferred relative proportions of zones of the degassing arrangement 1. Here and preferably, the target of the degassing arrangement 1 is preparing the liquid for a biotechnological use.

The degassing arrangement 1 comprises a flow channel 2 through which the liquid flows as a liquid flow 3. The flow channel 2 may comprise a single "channel" or multiple "channels" in parallel, in the following, only the resulting flow cross-section is of relevance for aspects discussing the flow.

The flow channel 2 comprises a channel inlet 4 for the inflow of the liquid and a channel outlet 5 for the outflow of the liquid. Preferably, the degassing arrangement 1 is formed by a single device delimited by the channel inlet 4 and the channel outlet 5. As will be explained, the flow cross-section of the flow channel 2 varies between the channel inlet 4 and the channel outlet 5. This variation is necessary for the proposed function.

With a view to Fig. 1 and particularly to Fig. 1a), the flow channel 2 comprises an initial zone 6 arranged between the channel inlet 4 and the channel outlet 5, which has a narrowed flow cross-section compared to a flow cross-section preceding the initial zone 6 in a direction of flow 7, such that the velocity of the liquid flow 3 in the initial zone 6 is increased compared to a velocity of the liquid flow 3 before the initial zone 6 and thereby the static pressure of the liquid is reduced such that the gas is released from the liquid. In general, the narrowed flow cross-section causes the Venturi effect. The Venturi effect makes the gas separate from the liquid. It is therefore necessary that the initial zone 6 has a narrowed flow cross-section compared to any zone prior to the initial zone 6, whether that zone is, as preferably, part of the degassing arrangement 1, or not, is not essential. Here and preferably, the degassing arrangement 1 is designed as a single device for easy handling. It is however particularly easy to use the degassing arrangement 1, in particular device, if the channel inlet 4 and the channel outlet 5 are of the same cross-section and in particular of the same or almost the same cross-section as a tubing of for example a liquid processing system which the degassing arrangement 1 is part of.

The flow channel 2 comprises a separation zone 8 arranged between the channel inlet 4 and the channel outlet 5, which in the direction of flow 7 follows the initial zone 6 and in which released gas is separated from the liquid flow 3. The separation zone 8 is generally the zone in which a stream including the separated gas is separated from the liquid flow 3. In Fig. 1, the gas moves upwards through a degassing outlet 9 which will still be explained, and the liquid flow 3 continues towards the channel outlet 5. It may be the case that liquid is removed with the gas, however, preferably, none of the liquid, at least in liquid form, is removed from the liquid flow 3 together with the gas.

The term "narrowed" means that the respective zone is sufficiently narrow to create a relevant Venturi effect. Preferably, the respective zone is narrowed to a flow cross-section of at most 75%, preferably at most 50%, more preferably at most 25%, of the base flow cross-section compared to which the flow cross-section is narrowed. It should be noted that zones cannot be defined arbitrarily. A zone is always noticeably different from another zone with regards to the liquid flow 3, for example the direction of flow 7, the flow cross-section or the like.

Generally, any combination of the named zones herein may have the same direction of flow 7, as shown for all zones. The liquid flow 3 through all zones may be continuous.

Essential is that the separation zone 8 comprises an upper section 10 and a lower section 11, which are shown in Fig. 1. The upper and lower sections 11 can be arbitrarily defined as long as the upper section 10 is completely above the lower section 11 vertically. Further essential is that the separation zone 8 has an enlarged flow cross-section compared to the smallest flow cross-section of the initial zone 6. Preferably, the separation zone 8 has an enlarged flow cross-section compared to the largest flow cross-section of the initial zone 6. More preferably, all flow cross-sections of the separation zone 8 are larger than the largest flow cross-section of the initial zone 6. Therefore, the velocity of the liquid flow 3 is slower in the separation zone 8 than in the initial zone 6. The gas bubbles in the separation zone 8 rise due to gravity along the separation zone 8 and accumulate in the upper section 10, whereby degassed liquid collects in the lower section 11.

The degassed liquid flows out through the channel outlet 5 as a main flow 12. The term "main flow" 12 means, that more than 50% of the mass flow entering the channel inlet 4 as part of the liquid flow 3 flows out through the channel outlet 5. Preferably, more than 90%, more preferably more than 95% or 99% of the mass flow flows out through the channel outlet 5. A degassing outlet 9 is arranged at the upper section 10, through which the released gas flows out of the flow channel 2 as a secondary flow 13. Here and preferably, the flow cross-section of the separation zone 8 is constant apart from the obstacle structure 14 which will be explained later. Further preferred zones of the degassing arrangement 1 will be explained below. It should be understood that zones do not overlap. Here and preferably, any combination of zones described and/or shown as being adjacent are directly adjacent. All zones present in the shown embodiment between the channel inlet 4 and the channel outlet 5 will be described. Any of the zones described below are optional. Here and preferably, no additional zones are present. That is also true, if one or more of the described zones are not present. The separation zone 8, here and preferably, has a length of at least 1 cm prior to the degassing outlet 9.

Here and preferably, the lower section 11 comprises the lower 50% of the flow cross-section of the separation zone 8 and/or the upper section 10 comprises the upper 50% of the flow cross-section of the separation zone 8. Here and preferably, the channel outlet 5 is arranged with more than 50%, preferably more than 75%, of its flow cross-section, or possibly but not shown completely, at the height of the lower section 11. For this purpose, the constriction zone 15 yet to be described is ignored.

In one embodiment not shown, the separation zone 8 comprises more than one, preferably more than two, fluid lines. The flow cross-section is then the added flow cross-section of the fluid lines. The fluid lines may be arranged to increase the separation between liquid and gas. Each fluid line may have a degassing outlet 9, the degassing outlets 9 together forming the degassing outlet 9.

The term "enlarged" is defined as the opposite of "narrowed", therefore, preferably, the respective flow cross-section is enlarged for at least 33%, preferably at least 100%, more preferably at least 400%. The %-values for enlarging and narrowing may be true for any of the described enlargings/narrowings.

The degassing arrangement 1 may have a diffuser zone 16 arranged between the channel inlet 4 and the channel outlet 5, which in the direction of flow 7 follows the initial zone 6 and precedes the separation zone 8. The diffuser zone 16 extends from the initial zone 6 to the separation zone 8. Preferably, the diffuser zone 16 has a continuously increasing flow cross-section in the direction of flow 7.

It may be the case, as shown, that the initial zone 6 and the diffuser zone 16 transition continuously into one another, and/or, that the diffuser zone 16 and the separation zone 8 transition continuously into one another. A continuous transition is a transition with a side wall running in an angle of less than 90° between the side wall and the direction of fluid flow 7.

Here and preferably, for any zone the angle between all walls and the direction of flow 7 is less than 45°, preferably less than 30° more preferably less than 20°, even more preferably less than or equal to 15°. An angle of approximately 15° may be small enough to keep the fluid flow laminar, which may be desired in some embodiments. This may be true for any one, any combination of, or all zones.

The degassing arrangement 1 may also comprise a nozzle zone 17 arranged between the channel inlet 4 and the channel outlet 5, which in the direction of flow 7 precedes the initial zone 6 and preferably directly follows the channel inlet 4. The nozzle zone 17 may have a flow cross-section which decreases, in particular continuously, from the channel inlet 4 to the initial zone 6 in the direction of flow 7. Preferably, the nozzle zone 17 and the initial zone 6 transition continuously into one another. Preferred angles between the walls of the nozzle zone 17 and the direction of flow 7 are between 5° and 50°, preferably between 10° and 30°.

The degassing arrangement 1 may comprise a constriction zone 15 which is arranged between the channel inlet 4 and the channel outlet 5, which in the direction of flow 7 follows, in particular directly, the separation zone 8. The constriction zone 15 has a narrowed flow cross-section compared to the separation zone 8. Here and preferably, the constriction zone 15 is narrowed in such a manner, that the fluid flow is blocked more in the upper section 10 than in the lower section 11, in particular is not blocked in the lower section 11.

The constriction zone 15 may have a flow cross-section which decreases, in particular continuously, from the separation zone 8 to the channel outlet 5. Preferably, the constriction zone 15 is formed as an oblique truncated cone. The constriction zone 15 may be formed in such way, that a geometric center axis of the constriction zone 15 and/or the channel outlet 5 deviates from a geometric center axis of the separation zone 18, in particular is shifted downward in the vertical direction from the geometric center axis of the separation zone 18.

According to one embodiment it is proposed that the channel inlet 4 and/or the nozzle zone 17 and/or the initial zone 6 and/or the diffuser zone 16 and/or the separation zone 8 and/or the channel outlet 5 are rotationally symmetrical. Alternatively, any other shape, in particular an oval shape, is also possible.

It may be the case that the channel inlet 4 and/or the nozzle zone 17 and/or the initial zone 6 and/or the diffuser zone 16 and/or the separation zone 8 have a common geometric center axis 19, preferably, that a geometric center axis of the channel outlet 20 deviates from the common geometric center axis 19. It should also be understood that here and preferably, each zone has only one geometric center axis if it comprises only one fluid line. Here and preferably, the geometric center axis of the channel outlet 20 is shifted downward in the vertical direction from the common geometric center axis 19.

Turning now towards Fig. 1b), it may be the case that the degassing arrangement 1 comprises a separating arrangement 21 for separating the released gas from the liquid to create the secondary flow 13 as a gas flow. Preferably, the separating arrangement 21 comprises a membrane 22 which is arranged in or at the degassing outlet 9 such that the secondary flow 13 flows through the membrane 22. The membrane 22 may be a hydrophobic membrane, preferably a hydrophobic membrane for sterilizing grade filtration. The term membrane means any kind of air or gas filter arrangement. Such filters are well known in the state of the art. Preferably the filters used in this embodiment are flat filter membranes or pleated filter membranes. However, other filter types, such as non-woven or woven filters could also be employed.

A further advantage of this embodiment is that the degassing arrangement 1 enables a clean separation of the released gas fraction from the liquid fraction. Preferably the secondary flow 13 is substantially free of liquid (medium) such as water. This means that the volume ratio (*ψᵢⱼ* = *Vᵢ*/*Vⱼ,* wherein *Vᵢ* is the volume of liquid medium and *Vⱼ* is the volume of released gas) in percentage of the liquid medium in the secondary flow 13 of released gas is preferably less than 10% v/v, more preferred less than 5% v/v and even more preferred less than 3% v/v. This type of separation ensures maximum yield of degassed liquid without significant loss. This finally provides a high efficiency of the degassing arrangement 1 and a minimized energy requirement.

As is shown in Fig. 1a) and b) schematically, the degassing arrangement 1 may comprise a guiding arrangement 23 for guiding the released gas in the separation zone 8. Preferably, the guiding arrangement 23 comprises at least one guiding element 24 inside the liquid flow 3 to support the accumulation of the gas bubbles in the upper section 10. More preferably, the at least one guiding element 24 forms a flow-through obstacle structure 14. The liquid flow 3 then flows through the obstacle structure 14. The obstacle structure 14 may be designed as a labyrinth, as a grid or as a perforated plate. The guiding arrangement 23 may be arranged partially or fully before the degassing outlet 9 in the direction of flow 7. The guiding arrangement 23 may be positioned perpendicular to the direction of flow 7, or the guiding arrangement 23 may be inclined at a certain angle to the direction of flow 7.

Further shown in Fig. 1b) and preferably, the degassing arrangement 1 comprises a suction arrangement 25 for applying a pressure to the degassing outlet 9 which is lower than a pressure in the separation zone 8 ("underpressure"). Preferably, the suction arrangement 25 comprises a suction channel 26 for creating the lower pressure via the Venturi effect and a suction fluid, preferably suction liquid, flows through the suction channel 26. Here and exemplarily, the suction fluid flows in a direction opposite to the direction of the liquid flow 3. In Fig. 2, the directions are schematically shown as being more or less parallel and in the same direction.

As shown it is preferably the case that the suction channel 26 comprises a suction zone 27 which has a narrowed flow cross-section, compared to any flow cross-section prior to and or behind the suction zone 27, and which is connected to the separation zone 8 via the degassing outlet 9. Preferably, the suction channel 26 comprises a suction channel inlet 28 and a suction channel outlet 29, between which the suction zone 27 is arranged. More preferably, the suction channel inlet 28 and the suction channel outlet 29 each have an enlarged flow cross-section compared to the narrowed flow cross-section of the suction zone 27. In the suction zone 27, the suction fluid flow is accelerated by the constricted flow cross-section in such a way that the static pressure in the suction zone 27 is reduced, and the gas is sucked out of the separation zone 8 via the degassing outlet 9 towards the suction fluid flow.

Preferably, the suction channel 26 comprises a suction nozzle zone 30 which in the direction of flow 31 precedes the suction zone 27. The suction nozzle zone 30 has a flow cross-section which decreases, in particular continuously, from the suction channel inlet 28 to the suction zone 27. Preferably, the suction nozzle zone 30 directly follows the suction channel inlet 28 in the direction of flow of the suction fluid 31 and/or the suction nozzle zone 30 and the suction zone 27 continuously transition into each other.

According to one embodiment it is proposed that the suction channel 26 comprises a mixing zone 32 arranged between the suction channel inlet 28 and the suction channel outlet 29, which in the direction of flow of the suction fluid 31 follows the suction zone 27 and in which gas received from degassing outlet 9 is mixed with the suction fluid. The mixing zone 32 has an enlarged flow cross-section compared to the smallest, and in particular largest, flow cross-section of the suction zone 27.

The suction channel 26 may comprise a suction constriction zone 42 (Fig. 3) arranged between the suction channel inlet 28 and the suction channel outlet 29, which in the direction of flow 31 follows the mixing zone 32. The suction constriction zone 42 has a narrowed flow cross-section compared to the flow cross-section of the mixing zone 32. In particular, the suction constriction zone 42 may be used to adapt the suction channel outlet 29 to a cross-section of a following tube. Preferably, the suction constriction zone 42 has a flow cross-section which decreases, in particular continuously, from the mixing zone 32 to the suction channel outlet 29.

The suction channel 26 may comprise a suction diffuser zone 33 which in the direction of flow 31 follows the suction zone 27. The suction diffuser zone 33 has a flow cross-section which increases, in particular continuously, from the suction zone 27 to the suction channel outlet 29 or the mixing zone 32. Preferably, the suction diffuser zone 33 directly precedes the suction channel outlet 29, and/or, the suction diffuser zone 33 and the suction zone 27 transition continuously into one another.

According to one embodiment it is proposed that the suction channel inlet 28 and/or the suction nozzle zone 30 and/or the suction zone 27 and/or the suction diffuser zone 33 and/or the suction channel outlet 29 are rotationally symmetrical, and/or, that the suction channel inlet 28 and/or the suction nozzle zone 30 and/or the suction zone 27 and/or the suction diffuser zone 33 have a common suction geometric center axis 34. Here and preferably, the common suction geometric center axis 34 and the geometric center axis of the flow channel 2 are arranged parallel to one another.

Turning more towards the three-dimensional aspects not shown, here and preferably, the flow cross-section of the separation zone 8 narrows towards its upper end. Preferably, the flow cross-section of the separation zone 8 has the most narrow part of at least its upper half at the top, at least at the position of the degassing outlet 9. The separation zone 8 here and preferably has a top part which is inclined from the side of the initial zone 6 towards the degassing outlet 9 and/or directly ends at the constriction zone 15. The gas is trapped at the degassing outlet 9 in this manner.

It may also be the case that a maximum width of the cross-section of the separation zone 8 is greater than a maximum height of the cross-section of the separation zone 8. The cross-section of the separation zone 8 may be oval or the cross-section of the upper section 10 may be triangular.

Figure 3 shows a spatial computer simulation of the behavior of flows (liquid flow 3, main flow 12, secondary flow 9 and suction flow 31) and the gas concentration within a degassing arrangement 1 comprising a flow channel 2 and a suction channel 26. The tested degassing arrangement 1 is mainly comparable with the arrangement of Fig. 1 b). However, in the tested arrangement the initial zone 6 is formed as a nozzle, which is a possible embodiment independently. The same design is chosen for the suction zone 27. Additionally, the suction channel 26 comprises a mixing zone 32 as well as a subsequent suction constriction zone 42, both follow the suction diffuser zone 33 in the direction of suction flow 31. The simulation demonstrates that the arrangement is able to effect degassing of the liquid flow 3, in particular the removal of CO₂. Especially in the mixing zone 32 the removed CO₂ could be clearly observed in form of a dark stripe downstream of the suction zone 27. At the end of the mixing zone 32 and along the suction constriction zone 42, the removed gas dispersed in the suction flow.

Another teaching which is of equal importance relates to a liquid processing system for processing a liquid for a biotechnological process, wherein the liquid processing system comprises a proposed degassing arrangement 1, wherein the liquid processing system is configured to produce pure or ultrapure water. Such a liquid processing system is shown in Fig. 2. Preferably, the liquid processing system comprises a reverse-osmosis system 35 and/or a deionization system 36. More preferably, the degassing arrangement 1 is located downstream of the reverse-osmosis system 35 and/or upstream of the deionization system 36. Further, as shown in Fig. 2, the liquid processing system may comprise one or more conductivity sensors 37, a preprocessing unit 38, a pump 39 and a water softener unit 40. Preferably, the liquid processing system comprises two or more reverse-osmosis systems 35 operated in parallel mode.

According to one embodiment it is proposed, that the liquid processing system comprises at least two degassing arrangements 1 in series. This relates to the flow channels 2. Preferably, the suction channels 26 of the degassing arrangements 1 are also connected in series.

According to one embodiment it is proposed that a wastewater output line 41, in particular of the reverse-osmosis system 35 or of the deionization system 36, is connected to the suction channel 26 and provides the suction fluid.

In a further embodiment the liquid processing system comprises additionally a pump 39, at least one conductivity sensor 37 and/or a water softener. The pump 39 may be positioned upstream of the one or more reverse osmosis systems 35 in the direction of liquid flow 3. A conductivity sensor 37 may be positioned upstream of a reverse osmosis system 35 or deionization system 36, between a reverse osmosis system 35 and the subsequent (downstream) degassing arrangement 1 and/or downstream of the degassing arrangement 1 or a deionization system 36. A water softener may be positioned between the degassing arrangement 1 and a subsequent (downstream) deionization system 36.

In one preferred embodiment the liquid processing system comprises the following elements in the direction of liquid flow 3:
- a conductivity cell/sensor
- optionally, a pretreatment cartridge
- a pump 39
- one or more reverse osmosis system 35 (in case of more than one reverse osmosis systems 35, they are operated in parallel mode)
- a further conductivity cell/sensor
- the proposed degassing arrangement 1
- a water softener
- a deionization system 36, e.g., an EDI stack,
- a further conductivity cell/sensor.

In another embodiment the liquid processing system comprises additionally an UV lamp suitable to remove organic components (TOC). Microbial cells may be inactivated by the adsorption of the UV light and water is produced for e.g. use in chromatography.

Another teaching which is of equal importance relates to a use of a proposed degassing arrangement 1 for producing pure or ultrapure water. Preferably, the production of pure or ultrapure water comprises a reverse-osmosis step and/or a deionization step, more preferably, the degassing is performed after the reverse-osmosis step and/or prior to the deionization step.

Another teaching which is of equal importance relates to a method of degassing a flowing liquid, in particular water, in which a gas, in particular carbon dioxide, is dissolved, via a degassing arrangement 1, in particular a proposed degassing arrangement 1, wherein the degassing arrangement 1 comprises a flow channel 2 through which the liquid flows as a liquid flow 3, wherein the flow channel 2 comprises a channel inlet 4 for the inflow of the liquid and a channel outlet 5 for the outflow of the liquid, wherein the flow cross-section of the flow channel 2 varies between the channel inlet 4 and the channel outlet 5, wherein the flow channel 2 comprises an initial zone 6 arranged between the channel inlet 4 and the channel outlet 5, which has a narrowed flow cross-section compared to a flow cross-section preceding the initial zone 6 in a direction of flow 7, such that the velocity of the liquid flow 3 in the initial zone 6 is increased compared to a velocity of the liquid flow 3 before the initial zone 6 and thereby the static pressure of the liquid is reduced such that the gas is released from the liquid, wherein the flow channel 2 comprises a separation zone 8 arranged between the channel inlet 4 and the channel outlet 5, which in the direction of flow 7 follows the initial zone 6 and in which released gas is separated from the liquid flow 3. Increased means that the velocity either increases in the initial zone 6 and/or is already increased when entering the initial zone 6.

Here it is proposed that the separation zone 8 comprises an upper section 10 and a lower section 11, that the separation zone 8 has an enlarged flow cross-section compared to the smallest flow cross-section of the initial zone 6, such that the velocity of the liquid flow 3 is slower in the separation zone 8 than in the initial zone 6, that the gas bubbles in the separation zone 8 rise due to gravity along the separation zone 8 and accumulate in the upper section 10, whereby degassed liquid collects in the lower section 11, that the degassed liquid flows out through the channel outlet 5 as a main flow 12, and, that a degassing outlet 9 is arranged at the upper section 10, through which the released gas flows out of the flow channel 2 as a secondary flow 13.

## Claims

1. Degassing arrangement for degassing a flowing liquid, in particular water, in which a gas, in particular carbon dioxide, is dissolved,
wherein the degassing arrangement (1) comprises a flow channel (2) through which the liquid flows as a liquid flow (3), wherein the flow channel (2) comprises a channel inlet (4) for the inflow of the liquid and a channel outlet (5) for the outflow of the liquid, wherein the flow cross-section of the flow channel (2) varies between the channel inlet (4) and the channel outlet (5),
wherein the flow channel (2) comprises an initial zone (6) arranged between the channel inlet (4) and the channel outlet (5), which has a narrowed flow cross-section compared to a flow cross-section preceding the initial zone (6) in a direction of flow (7), such that the velocity of the liquid flow (3) in the initial zone (6) is increased compared to a velocity of the liquid flow (3) before the initial zone (6) and thereby the static pressure of the liquid is reduced such that the gas is released from the liquid,
wherein the flow channel (2) comprises a separation zone (8) arranged between the channel inlet (4) and the channel outlet (5), which in the direction of flow (7) follows the initial zone (6) and in which released gas is separated from the liquid flow (3),
**characterized in**
**that** the separation zone (8) comprises an upper section (10) and a lower section (11), that the separation zone (8) has an enlarged flow cross-section compared to the smallest flow cross-section of the initial zone (6), such that the velocity of the liquid flow (3) is slower in the separation zone (8) than in the initial zone (6), that the gas bubbles in the separation zone (8) rise due to gravity along the separation zone (8) and accumulate in the upper section (10), whereby degassed liquid collects in the lower section (11),
**that** the degassed liquid flows out through the channel outlet (5) as a main flow (12), and, that a degassing outlet (9) is arranged at the upper section (10), through which the released gas flows out of the flow channel (2) as a secondary flow (13).

2. Degassing arrangement according to claim 1, **characterized in that** the degassing arrangement (1) comprises a diffuser zone (16) arranged between the channel inlet (4) and the channel outlet (5), which in the direction of flow (7) follows the initial zone (6) and precedes the separation zone (8), that the diffuser zone (16) extends from the initial zone (6) to the separation zone (8), preferably, that the diffuser zone (16) has a continuously increasing flow cross-section in the direction of flow (7), more preferably, that the initial zone (6) and the diffuser zone (16) transition continuously into one another, and/or, that the diffuser zone (16) and the separation zone (8) transition continuously into one another.

3. Degassing arrangement according to claim 1 or 2, **characterized in that** the degassing arrangement (1) comprises a nozzle zone (17) arranged between the channel inlet (4) and the channel outlet (5), which in the direction of flow (7) precedes the initial zone (6) and preferably directly follows the channel inlet (4), that the nozzle zone (17) has a flow cross-section which decreases, in particular continuously, from the channel inlet (4) to the initial zone (6) in the direction of flow (7), preferably, that the nozzle zone (17) and the initial zone (6) transition continuously into one another.

4. Degassing arrangement according to one of the preceding claims, **characterized in that** the degassing arrangement (1) comprises a constriction zone (15) which is arranged between the channel inlet (4) and the channel outlet (5), which in the direction of flow (7) follows the separation zone (8), that the constriction zone (15) has a flow cross-section which decreases, in particular continuously, from the separation zone (8) to the channel outlet (5), preferably that the constriction zone (15) is formed as an oblique truncated cone, more preferably, that the constriction zone (15) is formed in such way, that a geometric center axis of the channel outlet (20) deviates from a geometric center axis of the separation zone (18), in particular is shifted downward in the vertical direction from the geometric center axis of the separation zone (18).

5. Degassing arrangement according to one of the preceding claims, **characterized in that** the channel inlet (4) and/or the nozzle zone (17) and/or the initial zone (6) and/or the diffuser zone (16) and/or the separation zone (8) and/or the channel outlet (5) are rotationally symmetrical, and/or, that the channel inlet (4) and/or the nozzle zone (17) and/or the initial zone (6) and/or the diffuser zone (16) and/or the separation zone (8) have a common geometric center axis (19), preferably, that a geometric center axis of the channel outlet (20) deviates from the common geometric center axis (19), more preferably, that the geometric center axis of the channel outlet (20) is shifted downward in the vertical direction from the common geometric center axis (19).

6. Degassing arrangement according to one of the preceding claims, **characterized in that** the degassing arrangement (1) comprises a separating arrangement (21) for separating the released gas from the liquid to create the secondary flow (13) as a gas flow, preferably, that the separating arrangement (21) comprises a membrane (22) which is arranged in or at the degassing outlet (9) such that the secondary flow (13) flows through the membrane (22), more preferably, that the membrane (22) is a hydrophobic membrane (22).

7. Degassing arrangement according to one of the preceding claims, **characterized in that** the degassing arrangement (1) comprises a guiding arrangement (23) for guiding the released gas in the separation zone (8), preferably, that the guiding arrangement (23) comprises at least one guiding element (24) inside the liquid flow (3) to support the accumulation of the gas bubbles in the upper section (10), more preferably, that the at least one guiding element (24) forms a flow-through obstacle structure (14), that the liquid flow (3) flows through the obstacle structure (14), more preferably that the obstacle structure (14) is designed as a labyrinth, as a grid or as a perforated plate.

8. Degassing arrangement according to one of the preceding claims, **characterized in that** the degassing arrangement (1) comprises a suction arrangement (25) for applying a pressure to the degassing outlet (9) which is lower than a pressure in the separation zone (8), preferably, that the suction arrangement (25) comprises a suction channel (26) for creating the lower pressure via the Venturi effect, that a suction fluid flows through the suction channel (26).

9. Degassing arrangement according to claim 8, **characterized in that** the suction channel (26) comprises a suction zone (27) which has a narrowed flow cross-section and which is connected to the separation zone (8) via the degassing outlet (9), preferably, that the suction channel (26) comprises a suction channel inlet (28) and a suction channel outlet (29), between which the suction zone (27) is arranged, more preferably, that the suction channel inlet (28) and the suction channel outlet (29) each have an enlarged flow cross-section compared to the narrowed flow cross-section of the suction zone (27).

10. Degassing arrangement according to claim 8 or 9, **characterized in that** the suction channel (26) comprises a suction nozzle zone (30) which in the direction of flow (31) precedes the suction zone (27), that the suction nozzle zone (30) has a flow cross-section which decreases, in particular continuously, from the suction channel inlet (28) to the suction zone (27), preferably, that the suction nozzle zone (30) directly follows the suction channel inlet (28) in the direction of flow of the suction fluid (31) and/or that the suction nozzle zone (30) and the suction zone (27) continuously transition into each other.

11. Degassing arrangement according to one of the preceding claims, **characterized in that** the suction channel (26) comprises a mixing zone (32) arranged between the suction channel inlet (28) and the suction channel outlet (29), which in the direction of flow of the suction fluid (31) follows the suction zone (27) and in which gas received from degassing outlet (9) is mixed with the suction fluid, and the mixing zone (32) has an enlarged flow cross-section compared to the smallest flow cross-section of the suction zone (27), that the suction channel (26) comprises a suction constriction zone (42) arranged between the suction channel inlet (28) and the suction channel outlet (29), which in the direction of flow (31) follows the mixing zone (32), that the suction constriction zone (42) has a narrowed flow cross-section compared to the flow cross-section of the mixing zone (32), preferably, that the suction constriction zone (42) has a flow cross-section which decreases, in particular continuously, from the mixing zone (32) to the suction channel outlet (29).

12. Liquid processing system for processing a liquid for a biotechnological process, wherein the liquid processing system comprises a degassing arrangement (1), in particular according to any one of the preceding claims, wherein the degassing arrangement uses the Venturi effect to separate gas from liquid, wherein the liquid processing system is configured to produce pure or ultrapure water, wherein the liquid processing system comprises a reverse-osmosis system (35) and/or a deionization system (36), wherein the degassing arrangement (1) is located downstream of the reverse-osmosis system (35) and/or upstream of the deionization system (36).

13. Liquid processing system according to claim 12, **characterized in that** the liquid processing system comprises at least two degassing arrangements (1) according to one of claims 1 to 11 in series, preferably, that the suction channels (26) of the degassing arrangements (1) are connected in series.

14. Liquid processing system according to claim 12 or 13, **characterized in that** a wastewater output line (41) of the reverse-osmosis system (35) or of the deionization system (36) is connected to the suction channel (26) and provides the suction fluid.

15. Use of a degassing arrangement (1) according to one of claims 1 to 11 for producing pure or ultrapure water, preferably, wherein the production of pure or ultrapure water comprises a reverse-osmosis step and/or a deionization step, more preferably, wherein the degassing is performed after the reverse-osmosis step and/or prior to the deionization step.

16. Method of degassing a flowing liquid, in particular water, in which a gas, in particular carbon dioxide, is dissolved, via a degassing arrangement (1), in particular according to one of claims 1 to 11,
wherein the degassing arrangement (1) comprises a flow channel (2) through which the liquid flows as a liquid flow (3), wherein the flow channel (2) comprises a channel inlet (4) for the inflow of the liquid and a channel outlet (5) for the outflow of the liquid, wherein the flow cross-section of the flow channel (2) varies between the channel inlet (4) and the channel outlet (5),
wherein the flow channel (2) comprises an initial zone (6) arranged between the channel inlet (4) and the channel outlet (5), which has a narrowed flow cross-section compared to a flow cross-section preceding the initial zone (6) in a direction of flow (7), such that the velocity of the liquid flow (3) in the initial zone (6) is increased compared to a velocity of the liquid flow (3) before the initial zone (6) and thereby the static pressure of the liquid is reduced such that the gas is released from the liquid,
wherein the flow channel (2) comprises a separation zone (8) arranged between the channel inlet (4) and the channel outlet (5), which in the direction of flow (7) follows the initial zone (6) and in which released gas is separated from the liquid flow (3),
**characterized in**
**that** the separation zone (8) comprises an upper section (10) and a lower section (11), that the separation zone (8) has an enlarged flow cross-section compared to the smallest flow cross-section of the initial zone (6), such that the velocity of the liquid flow (3) is slower in the separation zone (8) than in the initial zone (6), that the gas bubbles in the separation zone (8) rise due to gravity along the separation zone (8) and accumulate in the upper section (10), whereby degassed liquid collects in the lower section (11),
**that** the degassed liquid flows out through the channel outlet (5) as a main flow (12), and, that a degassing outlet (9) is arranged at the upper section (10), through which the released gas flows out of the flow channel (2) as a secondary flow (13).
